# EUROPEAN PATENT APPLICATION

(11) **EP 3 650 585 A1**
(43) Date of publication of application: **13.05.2020**
(21) Application number: 18382798.9
(22) Date of filing: 12.11.2018
(51) Int. Cl.: C25B 1/00, C25B 9/06, C01B 32/19

(54) **ELECTROLYTIC CELL AND PROCEDURE FOR THE PREPARATION OF GRAPHENE BY MEANS OF ELECTROCHEMICAL EXFOLIATION**

(71) Applicant: Fundació Institut Català de Nanociència i Nanotecnologia, 08193 Bellaterra (ES); Consejo Superior de Investigaciones Científicas (CSIC), 28006 Madrid (ES)
(72) Inventor: Gómez Romero, Pedro, 08290 Cerdanyola (ES); Rueda García, Daniel, 08015 Barcelona (ES)
(74) Representative: Isern Patentes y Marcas S.L.

(57) **Abstract**

The present invention relates to an electrolytic cell (1) for obtaining graphene by electrolytic exfoliation of graphite (6), comprising a first electrode (2) and a second electrode (3) linked and spaced apart, and both electrodes submerged in a liquid electrolyte (7) contained in a vessel (8), where both electrodes (2, 3) are arranged parallel and in a horizontal plane in a functional condition where graphene is obtained, wherein the first electrode (2) is located right above the second electrode (3), the second electrode (2) presenting a confinement zone (4) (materialized by a confining non-conductive material(5)) wherein the graphite (6) to be exfoliated is contained,. The invention also relates to the process for obtaining few-layers graphene in said electrolytic cell

## Description

### Field of invention

The present invention belongs to field of electrochemistry, and in particular is related to a cell and a procedure for the preparation of few layers graphene by electrochemical exfoliation of graphite.

### State of the art

Graphene is an allotropic form of carbon which could be defined from a chemical point of view as polycyclic aromatic carbon composed form an extended of carbon atoms arranged in a planar structure of 6 atom rings.

The chemical bond and consequently structure of graphene were first described in 1930, but i wasn't until 2004 when Andre Geim and Konstantin Novoselov showed that a stable single graphene layer could be obtained from graphite. This material has been the subject of great interest mainly due to its outstanding properties and potential applications. On the other hand, the development of effective methods for the control production of graphene at a large scale is still pending.

Electrochemical exfoliation is one of the possible methods for the preparation of graphene which allows the isolation of few layer graphene through the intercalation of ion from an electrolyte in graphite precursor subject to high potentials. These high potentials lead to an accumulation of ions between graphite layers which induce the delamination of graphite into graphene.

The article of Khaled Parvez et Al. Exfoliation of graphite into graphene in aqueous solutions of inorganic salts, Journal of the American Chemical Society 136 (2014) describes the production of graphene by exfoliation in an electrolytic cell comprising an aqueous electrolyte solution in which two vertical electrodes (one of which is graphite) are dipped. The resulting product contains a sizable amount of oxygen (XPS C/O RATIO 17.2), and consequently a large concentration of defects. Furthermore, a characteristic of this technique is that the material to be exfoliated does break during the exfoliation and thus by losing electrical contact with the current collector the exfoliation process stops and the separated grain of material can no longer continue its exfoliation.

The article by Amr M. Abdelkader et Al. Continuous electrochemical exfoliation of micrometer-sized graphene using synergistic ion intercalations and organic solvents, ACS Applied materials & Interfaces, 6 (2014) describes an electrochemical exfoliation method for the synthesis of graphene through a continuous production system in which a synthetic graphite precursor is used as cathode on the base of the cell combined with a Platinum anode vertically arranged on top. The exfoliated product is dispersed in the electrolyte generating a dilute and stable dispersion, which makes necessary the use of filters with very small pore size for the filtering of great volumes of dispersion.

Patent US2016/097133 describes and electrolytic cell for the preparation of graphene from graphite using compact carbon precursors of great purity, thus leading to an exfoliation process requiring longer reaction times, more energy and more aggressive conditions to achieve the exfoliation (oxidizing agents), which leads to a final product with a high content of oxygen and defects.

Therefore there is still the need to develop highly efficient procedures for the production of graphene from any kind of graphite material, regardless of its aggregation state (monolithic, or as a powder), or crystallinity. That is, a simple procedure with minimal consumption of energy leading to a product easy to isolate, not requiring complex filtration processes and leading to graphene without impurities or defects.

### Brief description of the invention

The present invention solves the problems described above, since it refers an electrolytic cell with a horizontal arrangement of the electrodes and a procedure for the fabrication of graphene from any type of graphite, including soft cheap graphitic Materials such as powdered graphite.

This allows for an exfoliation process needing much less energy and time that required for more compact materials which in turn implies a process less aggressive leading to a product with very small amounts of defects and oxygen and at a reduced cost.

Thus, in a first embodiment, the present invention refers to an electrolytic cell for the fabrication of graphene by means of electrochemical exfoliation of graphite (hereafter the electrolytic cell of the present invention), comprising a first electrode and a second electrode linked through a circuit, and separated by a given distance between each other, and being both first and second electrodes immersed in a liquid electrolyte contained in a vessel, characterized in that the first electrode and the second electrode are arranged in horizontal parallel planes as a functional condition for the fabrication of graphene, wherein the first electrode is placed in a plane above the second electrode, with the second electrode presenting a confinement zone where the graphite to be exfoliated will be contained, with the mentioned confinement zone being bounded by a confining non-conducting material (such as a polymeric circular ring).

In a particular embodiment of the present invention, the confinement zone comprises a compacting element arranged in a plane parallel to the second electrode and in contact with the graphite to be exfoliated. More in particular, the compacting element is constituted by a porous non-conducting material, more in particular being a porous polymeric film. In a more particular embodiment the compacting element is made of filter paper.

In a particular embodiment of the present invention the first and second electrodes of the electrolytic cell of the present invention are arranged in parallel planes. More in particular the first and second electrodes of the electrolytic cell of the present invention are arranged at a distance between them of at least 1mm.

The electrodes of the present invention can be made of any conducting material as long as they are not oxidized at high voltages. In a particular embodiment, the first and second electrodes of the electrolytic cell of the present invention are made of the same material. More in particular, the first and second electrodes of the electrolytic cell of the present invention are made of platinum. In another particular embodiment of the present invention, the first and second electrodes of the electrolytic cell of the present invention are made of glassy carbon.

In another particular embodiment of the present invention, the graphite to be exfoliated in the electrolytic cell of the present invention is graphite powder.

In another particular embodiment of the present invention, the graphite powder is mixed with solid particles of a non-oxidizable conducting material. More in particular, the solid particles of non- oxidizable material are selected from glassy carbon and platinum. More in particular, the mixture of graphite powder with solid particles of non-oxidizable material contains between 5-95% (in volume) of graphite powder. In another particular embodiment of the present invention, the graphite powder is contained in a conducting porous material resistant to oxidation at high voltages. In another particular embodiment of the present invention the electrolyte is an electrolyte not leading to a stable dispersion of graphene.

When we refer to an electrolyte in the present invention we mean organic and/or aqueous electrolytes.

In a second embodiment, the present invention refers to a procedure for the fabrication of graphene by means of the electrochemical exfoliation of graphite in an electrolytic cell as described in the present invention (hereafter procedure of the present invention), characterized by the following steps:
a) Place the material to be exfoliated in the confinement zone on the second electrode.
b) Apply a voltage to initiate the electrolytic process, in a more particular embodiment a voltage comprised between 3-15V is applied for a time comprised between 0.5-120 minutes during which the reactor is purged with a flow of inert gas in order to eliminate the possible gases generated during the reaction.
c) Wash the product obtained after the electrolysis of step b in order to eliminate the electrolyte. In a more particular aspect the washing is made by filtering.

In a particular embodiment, voltage is applied in the form of pulses. More in particular, voltage is applied in the form of long pulses (10s to 1 min) of small voltages (1-5V) alternating with short pulses (1-10s) of high voltages (10-15V)

### Description of the figures

Figure 1 is a schematic view showing the elements forming one of the embodiments of the electrolytic cell of the present invention.

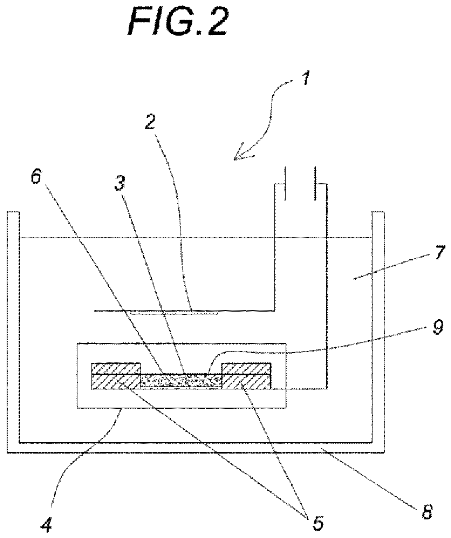

Figure 2 is a schematic view showing the elements forming one of the embodiments of the electrolytic cell of the present invention including the compacting element (9).

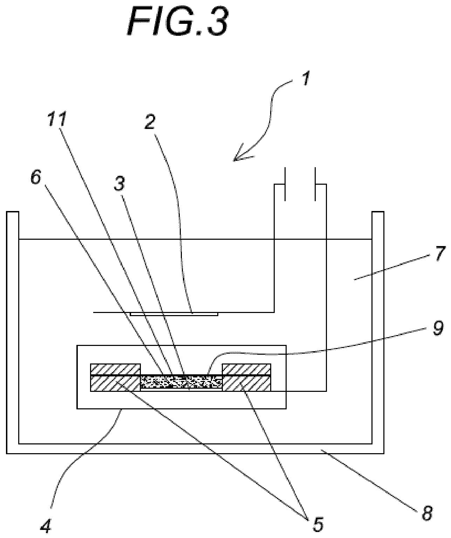

Figure 3 is a schematic view showing the elements forming one of the embodiments of the electrolytic cell of the present invention including the compacting element (9) and the graphite powder mixed with non-oxidizable solid particles.

### Description of a preferred embodiment of the invention

According to one form of realization, the electrolytic cell (1) for the fabrication of graphene by electrochemical exfoliation of graphite (6) comprises essentially a first electrode (2) a second electrode (3) linked and separated from each other, being both first and second electrodes (2), (3) immersed in a liquid electrolyte (7) contained in a vessel (8) made of a suitable material.

The first electrode (2) and the second electrode (3) are arranged horizontally as a functional condition to obtain graphene wherein the first electrode (2) is placed in a plane above the second electrode (3).

In a more detailed description of the second electrode (3), the second electrode (3) presents a confinement zone (4) where the graphite to be exfoliated (6) is placed, with that confinement zone (4) bounded by a confining non-conducting material (5). Preferably, the graphitic material to be exfoliated (6) is graphite powder, although any other suitable material could be used for the same end.

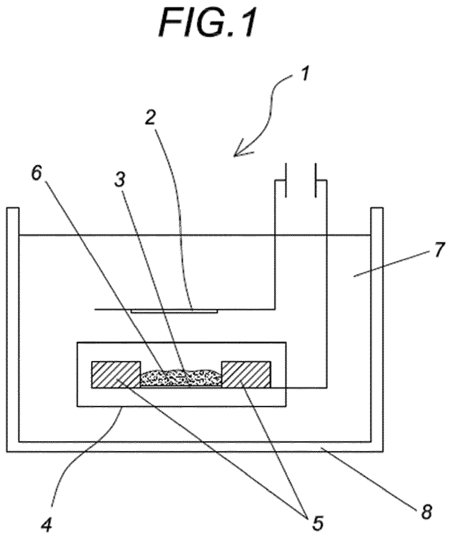

As shown in figure 1, the first electrode (2) and the second electrode (3) are linked (though the external circuit) and separated by at least a 1 mm gap, with the first electrode (2) placed in a plane above the second electrode (3) an arranged in parallel planes. Both electrodes (2, 3) must be made of a conducting material resistant to oxidation at high voltages, with both electrodes (2, 3) made of platinum in this particular embodiment.

### Example 1: Exfoliation of graphite powder in the electrolytic cell

In an example of realization, an electrolytic cell (1) was set up as shown in figure 1, constituted by a first electrode (2) and a second electrode (3), both made of platinum, separated by 10 mm and both immersed in a vessel containing an aqueous solution of (NH₄)₂SO₄ 0.1 M as electrolyte. On the second electrode (3) 0.1g of graphite powder with an average particle size of 20 µm was placed.

The cell was placed in a hood to assure a proper elimination of the gases generated during the reaction.

Then, a voltage of 5V was applied and the electrolysis was stopped after 5 min. The product obtained was washed in order to eliminate the remaining electrolyte salts by filtration with a PTFE filter (0.2 µm pore of diameter) and finally weighed.

As an additional procedure the better exfoliated fraction was separated from the rest by extraction with DMF, DMAc or NMP as it is described in the literature. In the present case, the product was dispersed in DMF and left to stand for 24h in such a way that only few-layer graphene did not precipitate.

Finally the precipitated fraction was collected, dried and weighed in order to determine the amount of few-layer graphene produced by weight difference.

The by-product not fully exfoliated could be used again as starting material for a new exfoliation process without the need of any special treatment.

### Example 2: Exfoliation of graphite powder in the electrolytic cell

The process of example 2 was carried out similarly to example 1 but using a 0.1M solution of tetraethylammonium tetrafluoroborate in acetonitrile as liquid electrolyte instead.

In this particular case, voltage was applied as pulses, alternating a long-lasting low voltage (3V for 30 seconds) with a short higher voltage (15V for 5 seconds).

### Example 3: Exfoliation of graphite powder in the electrolytic cell with a compacting element and conducting particles mixed with the graphite powder to be exfoliated.

In an example of realization, an electrolytic cell (1) was set up, formed by a first electrode (2) and a second electrode (3) (in the present case the positive electrode) both made of platinum and arranged in a planar configuration separated by 10 mm, both immersed in a container filled with an electrolyte made of a 0.1M (NH₄)₂SO₄ aqueous solution. A compacting element (9) was included in the confinement zone as shown in figure (3). The confined zone contained 0.07g of graphite powder mixed with small glassy carbon particles in a 1:1 ratio (by volume).

Next, a 5 V voltage was applied, and after 5 minutes the electrolysis was stopped. The product was then filtered off using a PTFE filter (0,2µm pore size) and washed to remove remaining electrolyte salt, then weighed.

As an additional procedure, the better exfoliated fraction was separated from the rest by extraction with DMF, DMAc or NMP as it is described in the literature. In the present case the product was dispersed in DMF and left to stand for 24h in such a way that only few-layer graphene did not precipitate.

Finally the precipitated fraction was collected, dried and weighed in order to determine the amount of few-layer graphene produced by weight difference.

The by-product not fully exfoliated could be used again as starting material for a new exfoliation process without the need of any special treatment.

In the present example, a treatment of 5 min at 5V with an aqueous electrolyte (under oxidizing conditions) led to an exfoliation yield of 20%. The product obtained showed a C/O ratio of 25 (1009 counts / 41 counts) as determined from Energy Dispersive X-Ray Spectroscopy (EDAX), representing approximately a 4% of oxygen, thus demonstrating a very low oxidation of the resulting product, mainly assigned to the oxidation of the nanosheets edges. This low oxidation is also confirmed by the ratio of the Raman G/D bands. A ratio of 4.8 between the G (3836,5 counts) and D (792 counts) RAMAN bands was found, indicating a very small amount of defects. The observed average size of the sheets (0,5 µm), the absence of defects and a high crystallinity of the sheets under the TEM microscope support the assignment of oxidation and defects to the edges of the sheets.

The procedure described in the present invention assures the obtention of few-layers graphene from graphite powder, using substantially lower voltages than those published in the literature and in a period of time much shorter, all of which represents a great reduction in the overall energy needed to carry out the process. Furthermore, thanks to the low voltages and short processing times needed, the concentrations of oxygen and defects in the final graphene are minimal. This is made possible thanks to the horizontal arrangement of the electrode on which the graphite powder is deposited, since in this configuration graphite particles are always in contact with the current collector.

The specific design of the electrolytic cell of the present invention allows for the use of graphite powder in such a way that during the electrochemical exfoliation process a flow of material from the electrode is generated, with larger, heavier particles being deposited by gravity in the confinement zone, in contact with the second electrode, whereas the lighter exfoliated material is displaced to the surface.

Thus, in addition to reducing the use of energy, time and production costs, the cell and procedure of the present invention allows for an automatic reutilization of poorly exfoliated material without any pre-treatment through a feedback system which could lead to yields close to 100%

## Claims

**1.** Electrolytic cell (1) for the fabrication of graphene by electrochemical exfoliation of graphite (6), comprising a first electrode (2) and a second electrode (3) linked and separated and being both first and second electrode (1), (2) immersed in a liquid electrolyte (7) contained in a vessel (8), **characterized in that** the first electrode (2) and the second electrode (3) are arranged in a horizontal plane as a functional condition for the obtention of graphene, wherein the first electrode (2) is placed in a plane above de second electrode (3), with the second electrode (3) featuring a confinement zone (4) wherein the graphite (6) to be exfoliated can be placed, with that confinement zone (4) being delimited by a confining non-conducting material (5).

**2.** Electrolytic cell (1) according to claim 1, wherein the confinement zone includes a compacting element (9) arranged in a plane parallel to the second electrode (3) and in contact with the graphite (6) to be exfoliated.

**3.** Electrolytic cell (1) according to any of the claims 1-2, wherein the first and second electrodes (2), (3) are arranged in planes parallel between them.

**4.** Electrolytic cell (1) according to any of the claims above, wherein the electrodes are separated by a distance of at least 1mm.

**5.** Electrolytic cell (1) according to any of the claims above, wherein the first electrode (2) and/or the second electrode (3) are made of platinum.

**6.** Electrolytic cell (1) according to any of the claims above, wherein the graphite to be exfoliated is in the form of graphite powder.

**7.** Electrolytic cell (1) according to claim 6, wherein the graphite powder is mixed with solid particles of a conducting non-oxidizable material.

**8.** Electrolytic cell (1) according to any of the claims above, wherein the electrolyte leads to a non-stable dispersion of graphene.

**9.** Procedure for the fabrication of graphene by electrolytic exfoliation of a graphitic material in an electrolytic cell (1) according to any of the claims 1-8, **characterized by** comprising the following steps:
a) place the material to be exfoliated (6) in the confinement zone (4) on the second electrode (3),
b) apply a voltage leading to the electrolytic process,
c) wash or purify the product obtained after the electrolysis carried out in step b).

**10.** Procedure for the fabrication of graphene according to claim 9, wherein the material to be exfoliated (6) is graphite powder.

**11.** Procedure for the fabrication of graphene according to any of the claims 9-10, wherein in step b) a voltage comprised between 3-15 V, is applied for a period of time comprised between 0.5-120 minutes,

**13.** Procedure for the fabrication of graphene according to any of the claims 9-11, wherein the voltage is applied in the form of pulses.
